# EUROPEAN PATENT APPLICATION

(11) **EP 2 797 027 A1**
(43) Date of publication of application: **29.10.2014**
(21) Application number: 13165353.7
(22) Date of filing: 25.04.2013
(51) Int. Cl.: G06K 9/00

(54) **A vehicle driver alert arrangement, a vehicle and a method for alerting a vehicle driver**

(71) Applicant: Volvo Car Corporation, 40 531 Göteborg (SE)
(72) Inventor: Ask, Martin, 42356 Torslanda (SE)
(74) Representative: Kraenzmer, Martin

(57) **Abstract**

A vehicle driver alert arrangement (1), a vehicle and a method (100) are provided. The vehicle driver alert arrangement (1) comprises a road speed detector (2) arranged to detect traffic speed limits and a host vehicle driver alerting means (3). The vehicle driver alert arrangement (1) further comprises one or more vehicle sensors (4) arranged to detect if a host vehicle driver initiates an overtake of a vehicle (5) ahead. The vehicle driver alert arrangement (1) is arranged to initiate the host vehicle driver alerting means (3) to alert the host vehicle driver if the road speed detector (2) detects an upcoming traffic speed limit change (7) and the one or more vehicle sensors (4) detect that the host vehicle driver initiates an overtake of the vehicle (5) ahead.

## Description

### TECHNICAL FIELD

Embodiments herein relate to a vehicle driver alert arrangement and a vehicle comprising a vehicle driver alert arrangement. Embodiments herein further relate to a method for alerting a vehicle driver.

### BACKGROUND

Arrangements for alerting vehicle drivers in hazardous or potentially hazardous situations are well known.

In some arrangements, a vehicle driver may be alerted if he/she drives too fast. In US2006061461A1 a vehicle speed limit reminding device is described. A warning signal is arranged to remind a driver that a current vehicle speed is over/lower than a maximum/minimum speed limit. DE102006056444A1 refers to a method for comparing a momentarily permissible maximum speed for a motor vehicle with a momentary speed of the vehicle. A warning signal is transmitted to a driver if he/she exceeds the momentarily permissible maximum speed.

In some arrangements, a vehicle driver may be alerted in other potentially hazardous situations. In the method described in DE102008043743A1 objects, such as traffic signs, can be recognized by a vehicle sensor. A warning signal can be sent to a driver if the vehicle sensor detects a certain object/traffic sign such as a warning triangle, a speed limit or the like. A warning signal can also be activated if the vehicle sensor detects that an oncoming vehicle in an opposing lane overtakes another oncoming vehicle.

The abovementioned arrangements may provide a vehicle driver with an alert or warning in some hazardous or potentially hazardous traffic scenarios, but are not capable to alert the vehicle driver when needed in other situations.

Thus, improvements in the field of vehicle driver alert arrangements, vehicles comprising a vehicle driver alert arrangement and methods for alerting a vehicle driver are still desirable.

### SUMMARY

An object of embodiments herein is to provide a vehicle driver alert arrangement without the limitations of the arrangements and methods described above.

According to an aspect, the object is achieved by a vehicle driver alert arrangement comprising: a road speed detector arranged to detect traffic speed limits and a host vehicle driver alerting means wherein the road speed detector is arranged to detect traffic speed limit changes, and the vehicle driver alert arrangement comprises one or more vehicle sensors arranged to detect if a host vehicle driver initiates an overtake of a vehicle ahead, and wherein the vehicle driver alert arrangement is arranged to initiate the host vehicle driver alerting means to alert the host vehicle driver if the road speed detector detects an upcoming traffic speed limit change and the one or more vehicle sensors detect that the host vehicle driver initiates an overtake of the vehicle ahead.

Since the sensors are arranged to detect if a host vehicle driver initiates an overtake of a vehicle ahead and the road speed detector is arranged to detect an upcoming traffic speed limit change, the host vehicle driver can be alerted if he/she initiates an overtake before a speed limit change. Due to the alert, the vehicle driver is informed of an upcoming speed limit change. An upcoming speed limit change can result in that the vehicle in front of the host vehicle, which the driver intends to overtake, accelerates. If the vehicle ahead accelerates during the host vehicle overtake, the distance required for overtaking may increase.

If the road, on which the host vehicle is driven, has two traffic lanes in the direction the host vehicle is driven, an increased overtake distance may result in that both lanes in that direction are occupied by the host vehicle and the vehicle overtaken by the host vehicle for a longer amount of time, whereby other vehicles cannot pass.

If the road on which the host vehicle is driven only has one traffic lane in the direction the host vehicle is driven and one oncoming lane, the host vehicle has to stay in the oncoming lane for a longer amount of time. This may be hazardous since there is a risk of meeting oncoming traffic.

If the driver of the host vehicle initiates an overtaking and the vehicle which the driver intends to overtake accelerates, the host vehicle driver may have to stop the overtaking and return to the position behind the other vehicle. Alternatively, the host vehicle driver may have to increase the acceleration more than he/she initially intended, whereby the speed may become higher than intended.

Thus, since the host vehicle driver can be alerted if he/she initiates an overtaking before a speed limit change, the host vehicle driver is provided with a relevant parameter which may affect his/her decision whether to fulfil the overtaking or not. Hereby the vehicle driver may base his/her decision on a more complete set of parameters. As a result, a hazardous or potentially hazardous traffic scenario may be avoided, and the abovementioned object is achieved.

According to some embodiments the one or more vehicle sensors is/are arranged to detect at least one of a steering wheel angle change, a yaw rate, a turning indicator activation, a distance to road markings, a distance to a surrounding vehicle and a driver behaviour. Hereby an overtake of a vehicle ahead of the host vehicle, initiated by the host vehicle driver can be detected in a reliable manner.

According to some embodiments the road speed detector comprises image capturing means and processing means. Since the road speed detector comprises image capturing means and processing means, a vehicle camera connected to a processor can be used to identify and analyse upcoming traffic speed limit changes such as road signs. Hereby e.g. an existing front facing camera, otherwise used for other purposes may be used also in this application.

According to some embodiments the road speed detector is connected to a map database and a positioning system. Since the road speed detector is connected to a map database and a positioning system, information regarding road speeds for different parts of a road network saved in a map database can be accessed based on the vehicle position. The position of the vehicle can be received from the positioning system.

According to some embodiments the road speed detector is connected to an intelligent transport system. Since the road speed detector is connected to an intelligent transport system, information relating to an upcoming traffic speed limit change can be accessed. The intelligent transport system may comprise roadside units, which may communicate with a vehicle communication unit. A vehicle communication unit may be arranged as an integrated part of the vehicle driver alert arrangement, or as a separate unit capable of communicating with the vehicle driver alert arrangement.

According to some embodiments the road speed detector is adapted to use historic traffic speed information. Since the road speed detector is adapted to use historic traffic speed information, information relating to traffic speed gathered during previous driving of a particular route may be used. Hereby the road speed detector can comprise saved information relating to traffic speed change positions. Traffic speed information may relate to changes of speed limits and/or previously used traffic speed along a known road section.

According to some embodiments the host vehicle driver alerting means is arranged to alert the driver visually, and/or audibly, and/or haptically. Since the host vehicle driver alerting means is arranged to alert the driver visually, and/or audibly and/or haptically, the driver may be alerted or warned in a clear and efficient manner.

According to some embodiments the road speed detector is arranged to detect an upcoming traffic speed limit change, where an upcoming traffic speed limit is higher than a threshold speed value, the threshold speed value being indicative of a current traffic speed limit and/or a present vehicle speed. Hereby the road speed detector may detect an upcoming speed limit increase in comparison with a current traffic speed limit prevailing at the position where the road speed detector detects the upcoming speed limit change. The road speed detector may also detect an upcoming speed limit increase in comparison with a host vehicle speed at the position where the road speed detector detects the upcoming speed limit change.

A further object of embodiments herein is to provide a vehicle comprising a vehicle driver alert arrangement without the limitations of the arrangements and methods described above.

According to an aspect the object is achieved by a vehicle comprising a vehicle driver alert arrangement according to aspects and/or embodiments disclosed herein. Hereby hazardous situations can be avoided.

A further object of embodiments herein is to provide a method for alerting a vehicle driver without the limitations of the arrangements and methods described above.

According to an aspect the object is achieved by a method comprising the steps of detecting an upcoming traffic speed limit change, detecting if a host vehicle driver initiates an overtake of a vehicle ahead, and if so, alerting the host vehicle driver. Due to this hazardous or potentially hazardous situations can be avoided.

According to some embodiments the step of detecting an upcoming traffic speed limit change comprises at least one of: detecting a traffic speed limit, accessing a map database, communicating with an intelligent transport system and accessing historic traffic speed information. Hereby one or more of the alternatives may be used in order to attain a reliable detection of an upcoming traffic speed limit change.

According to some embodiments the step of detecting an initiating of an overtake comprises at least one of: detecting a host vehicle steering wheel angle change, detecting a host vehicle yaw rate, detecting a host vehicle turning indicator activation, detecting a distance between the host vehicle and road markings, detecting a distance between the host vehicle and a surrounding vehicle and detecting a host vehicle driver behaviour. Hereby an overtake of a vehicle ahead of the host vehicle, initiated by the host vehicle driver can be detected in a reliable manner.

According to some embodiments the step of alerting the host vehicle driver comprises at least one of: alerting the host vehicle driver visually, alerting the host vehicle driver via audio and alerting the host vehicle driver haptically. Hereby the driver may be alerted or warned in a clear and efficient manner.

Further features and advantages of the embodiments herein described will become apparent when studying the appended claims and the following detailed description. Those skilled in the art will realize that different features of embodiments and aspects herein can be combined to create embodiments and aspects other than those described in the following, without departing from the scope of the appended claims.

### BRIEF DESCRIPTION OF THE DRAWINGS

The various aspects of embodiments herein, including its particular features and advantages, will be readily understood from the following detailed description and the accompanying drawings, in which:
Fig. 1 illustrates a vehicle driver alert arrangement according to some embodiments.
Fig. 2 illustrates a vehicle and a vehicle driver alert arrangement according to some embodiments.
Fig. 3 illustrates a method for alerting a vehicle driver.

### DETAILED DESCRIPTION

Embodiments herein will now be described more fully with reference to the accompanying drawings, in which example embodiments are shown. However, this application should not be construed as limited to the embodiments set forth herein. Disclosed features of example embodiments can be combined as readily understood by one of ordinary skill in the art to which this application belongs. Like numbers refer to like elements throughout.

Well-known functions or constructions will not necessarily be described in detail for brevity and/or clarity.

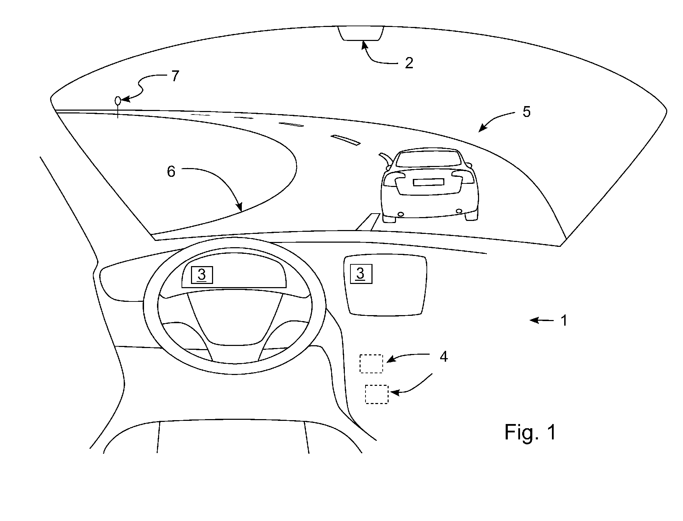

Fig. 1 illustrates a vehicle driver alert arrangement **1** according to embodiments. The vehicle driver alert arrangement 1 comprises a road speed detector **2** arranged to detect traffic speed limits and a host vehicle driver alerting means **3**. The vehicle driver alert arrangement 1 can be arranged in a vehicle of any kind, such as in a car, a truck, a minivan, a recreational vehicle, an off-road vehicle, a bus or the like. According to some embodiments, the vehicle driver alert arrangement 1 is a separate arrangement, and according to other embodiments the vehicle driver alert arrangement 1 is integrated with other vehicle arrangements or systems.

The vehicle driver alert arrangement 1 further comprises one or more vehicle sensors **4** arranged to detect if a host vehicle driver initiates an overtake of a vehicle **5** ahead. The term "ahead" refers to the point of view of a seated host vehicle driver, driving along a road **6** or route of any kind. The vehicle 5 ahead of, or in front of, a host vehicle H is thus a vehicle driving on substantially the same route or road 6 in substantially the same direction as the host vehicle H. Before an overtake of a vehicle 5, the host vehicle H approaches the vehicle 5 from behind.

The one or more vehicle sensors 4 is/are arranged to detect at least one of a steering wheel angle change, a yaw rate, a turning indicator activation, a distance to road markings, a distance to a surrounding vehicle and a driver behaviour. The information from the one of more sensors 4 can be processed and analysed in a processing unit equipped with logic to determine whether the information is indicating an overtake or not.

The vehicle driver alert arrangement 1 may be configured to indicate an overtake only if one or more predefined conditions are met, for example that at least two or more of: a steering wheel angle change, a yaw rate, a turning indicator activation, a distance to road markings, a distance to a surrounding vehicle and a driver behaviour are detected.

The vehicle driver alert arrangement 1 may also be configured to indicate an overtake only if a steering wheel angle change or a yaw rate exceeds a predefined value, or if a substantially lateral distance to road markings, i.e. a distance perpendicular to a longitudinal direction of the host vehicle H, changes in a predefined manner.

The vehicle driver alert arrangement 1 is arranged to initiate the host vehicle driver alerting means 3 to alert a host vehicle driver if the road speed detector 2 detects an upcoming traffic speed limit change **7** and the one or more vehicle sensors 4 detect that the host vehicle driver initiates an overtake of the vehicle 5 ahead of the host vehicle H.

The upcoming traffic speed limit change 7 can be indicated by a physical traffic sign or a traffic speed limit change communicated to the host vehicle H from an external source. A traffic speed limit change 7 can be arranged to indicate for vehicle drivers that a current allowed traffic speed is raised or lowered. If a driver is allowed to drive 70 km/h on a particular road section, a traffic speed limit change 7, for example in form of a traffic sign displaying "90", can be arranged to indicate for the driver that a new maximum allowed traffic speed is raised to 90 km/h for a following road section.

According to some embodiments, the vehicle driver alert arrangement 1 can be arranged to initiate the host vehicle driver alerting means 3 to alert a host vehicle driver if the road speed detector 2 detects an upcoming traffic speed limit raise or increase. According to some embodiments, the vehicle driver alert arrangement 1 can be arranged to initiate the host vehicle driver alerting means 3 to alert a host vehicle driver if the road speed detector 2 detects an upcoming traffic speed limit reduction.

The road speed detector 2 can comprise image capturing means. The image capturing means may be a camera, such as a HD-camera, night vision camera, IR-camera, highspeed camera, digital camera or movie camera for capturing images. The camera may be used in combination with a lens, such as a widescreen lens, a magnifying lens or a zoom lens. The image capturing means may be a vehicle mounted camera facing in a direction external of the host vehicle H. An existing forward facing camera which is used also for other purposes, such as safety purposes or parking aid, may be used. The camera may be mounted at or in the vicinity of a windscreen, grille or rear-view mirror of the host vehicle H. The camera may be arranged to capture images from a perspective substantially corresponding to the perspective a driver of the host vehicle H will have while seated in a driver seat of the host vehicle H.

The vehicle driver alert arrangement 1 can also comprise processing means, for example connected to the road speed detector 2. The processing means can be arranged to sort and/or analyse images received from the image capturing means such that images relating to traffic limit speed changes 7 can be identified and used. Image recognition means and/or software may be used for the sorting and/or analysing of the images. Hereby the vehicle driver alert arrangement 1 can be provided with information relating to numbers, text and/or other graphical information relating to upcoming speed limit changes 7 on e.g. traffic signs. The processing means may be an electronic computer of any kind, programmed to execute arithmetic and logical operations, and may include a CPU, memory units, and integrated circuits. The processing means may be separate processing means or processing means integrated in any other vehicle processing means. The processing means may be a part of a vehicle infotainment unit, such as an infotainment head unit, IHU.

According to some embodiments, the road speed detector 2 is connected to a map database and a positioning system, also referred to as a navigation system. A map database can comprise information relating to a geographical area, such as information relating to traffic speed limits, traffic signs, traffic rules, roads, lanes, buildings, destinations, points of interest, distances, and directions. A positioning system may comprise a combined satellite based positioning and mapping system, such as the American Global Positioning System (GPS), the European Galileo global navigation satellite system (GNSS), the Russian Globalnaya Navigatsionnaya Sputnikovaya Sistema or Global Navigation Satellite System (GLONASS) or the Chinese BeiDou (Compass) Navigation Satellite System.

According to some embodiments, the road speed detector 2 is adapted to use historic traffic speed information. A memory unit connected to the road speed detector 2 can comprise saved information relating to traffic speed limit change positions gathered during previous driving of a particular road or route.

The host vehicle driver alerting means 3 can be arranged to alert the driver visually, and/or audibly, and/or haptically. In some embodiments a visual alert may be displayed on a display, such as a driver information display, a centerstack display and/or a head up display. An alert light or a diode arranged to be seen by a seated vehicle driver may be used for the visual alert.

According to some embodiments audio means may be arranged to alert the vehicle driver. An existing audio- or entertainment system can be used to provide the driver with an alerting sound or a recorded message. Alternatively, a separate audio unit can be used.

According to some embodiments the vehicle driver can be alerted haptically. A haptic alert arrangement arranged in the vicinity of the seated vehicle driver may be used. The haptic alert arrangement can be arranged e.g. to vibrate a steering wheel, a pedal, a seat. In some embodiments, a haptic alert arrangement can be arranged through an interference with a steering or brake system. The alert may be pre-configured or configured by the driver.

The road speed detector 2, the one or more vehicle sensors 4, the host vehicle driver alerting means 3, the image capturing means, the processing means and other parts of the vehicle driver alert arrangement may be adapted to communicate with each other by any suitable means, such as via a controller area network (CAN), or any other vehicle based network.

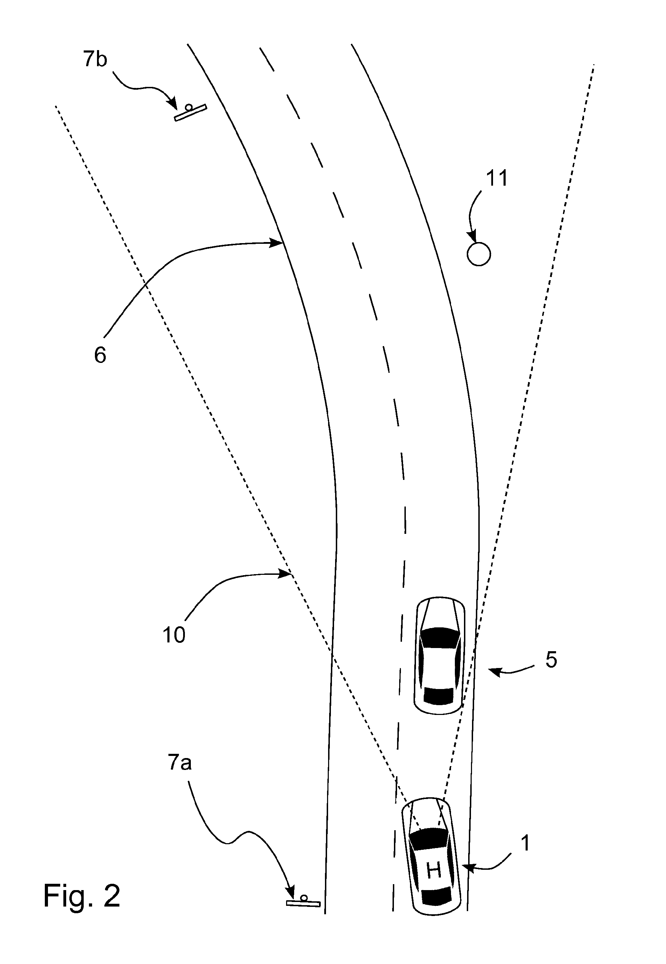

Fig. 2 illustrates a host vehicle H comprising a driver alert arrangement 1 according to some embodiments. The driver alert arrangement 1 according to these embodiments comprises at least some of the features described in connection with the embodiments of Fig. 1. Two traffic speed limit changes **7a** and **7b** are illustrated as traffic signs. In the Fig. 2 illustrated scenario, the host vehicle H has passed the first traffic speed limit change 7a.

The host vehicle H is driving on a road 6. Ahead, as seen from a driver seated in the host vehicle H, is another vehicle 5 driving. The road speed detector 2 may be arranged to detect both a current traffic speed limit and upcoming traffic speed limit changes. According to the embodiment illustrated in Fig. 2, the road speed detector 2 is monitoring a field **10** in front of the host vehicle H. Borders of the monitored field 10 are illustrated with dashed lines in Fig. 2.

The host vehicle H or arrangements thereof can be parts of or connected to an Intelligent Transport Systems (ITS) **11**. The ITS 11 can integrate communication between mobile and fixed nodes such as roadside units. ITS 11 can use both wired and wireless communications. For example can techniques presented in the DRIVE C2X-project be used. DRIVE C2X is a project under the European Directorate General for Communications Networks, Content and Technology (DG CONNECT). The project focuses on communication among vehicles (C2C) and between vehicles, a roadside and backend infrastructure system (C2I).

In Fig. 2, a situation where the host vehicle H has approached the vehicle 5 ahead of the host vehicle H is illustrated. Both the host vehicle H and the vehicle 5 ahead of the host vehicle H have passed the traffic speed limit change 7a. A first vehicle speed, for example 90km/h, is allowed on the road distance between the speed limit change 7a and the upcoming speed limit change 7b.

The road speed detector 2 is continuously detecting the road environment and detects the upcoming speed limit change 7b. Beyond the second speed limit change 7b a second vehicle speed, for example 110km/h is allowed.

In a situation where the vehicle driver initiates an overtake of the vehicle 5 ahead, one or more vehicle sensors is/are arranged to detect the overtake initiation.

In the situation where the upcoming speed limit change 7b is detected and the initiation of an overtake is detected, the vehicle driver alert arrangement 1 is arranged to initiate host vehicle driver alerting means to alert the host vehicle driver. Thus, the host vehicle driver is informed of the traffic scenario by the alert. Herby the vehicle driver is provided with additional information and can take the decision of whether to abort of fulfil the overtake based on a more complete set of data, compared to a situation without any alert.

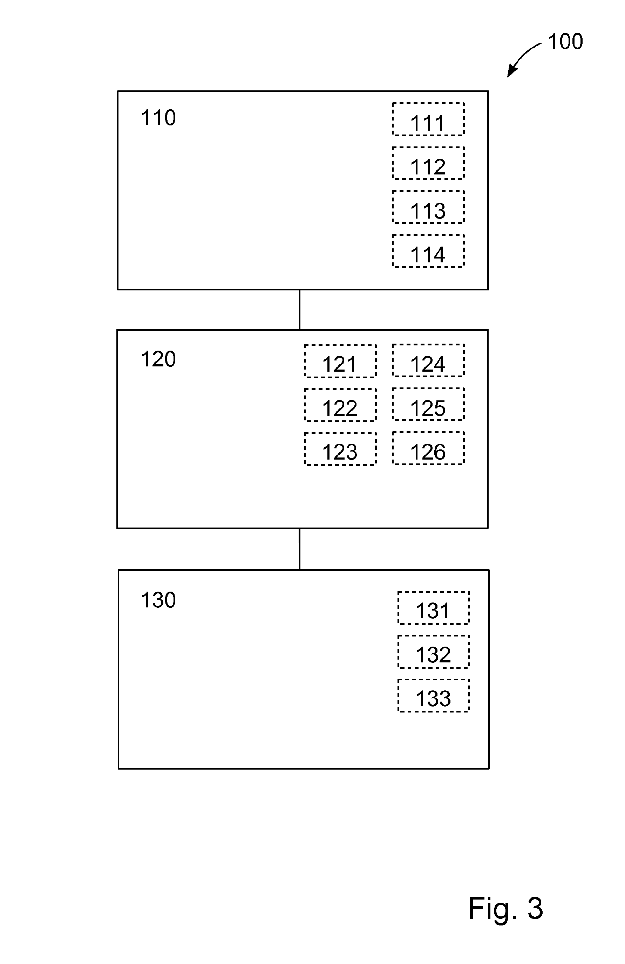

In Fig. 3 an embodiment of a method 100 for alerting a host vehicle driver is illustrated. The method 100 comprises the steps of detecting 110 an upcoming traffic speed limit change, detecting 120 if a host vehicle driver initiates an overtake of a vehicle ahead, and if so, alerting 130 the host vehicle driver.

According to some embodiments the step of detecting 110 an upcoming traffic speed limit change comprises at least one of: detecting 111 a traffic speed limit, accessing 112 a map database, communicating 113 with an intelligent transport system and accessing 114 historic traffic speed information.

According to some embodiments the step of detecting 120 an initiating of an overtake comprises at least one of: detecting 121 a host vehicle steering wheel angle change, detecting 122 a host vehicle yaw rate, detecting 123 a host vehicle turning indicator activation, detecting 124 a distance between the host vehicle and road markings, detecting 125 a distance between the host vehicle and a surrounding vehicle and detecting 126 a host vehicle driver behaviour, such as an acceleration.

According to some embodiments the step of alerting 130 the host vehicle driver comprises at least one of: alerting 131 the host vehicle driver visually, alerting 132 the host vehicle driver via audio and alerting 133 the host vehicle driver haptically.

In Fig. 3, the alternatives 111 - 114, 121 - 126 and 131 - 133 are illustrated with dashed lines.

Although the aspects has been described with reference to example embodiments, many different alterations, modifications and the like will become apparent for those skilled in the art.

Therefore, it is to be understood that the foregoing is illustrative of various example embodiments and the scope of the appended claims is not to be limited to the specific embodiments disclosed and that modifications to the disclosed embodiments, combinations of features of disclosed embodiments as well as other embodiments are intended to be included within the scope of the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A vehicle driver alert arrangement (1) comprising: a road speed detector (2) arranged to detect traffic speed limits and a host vehicle driver alerting means (3) **characterized in that** the road speed detector (2) is arranged to detect traffic speed limit changes (7), and **in that** the vehicle driver alert arrangement (1) comprises one or more vehicle sensors (4) arranged to detect if a host vehicle driver initiates an overtake of a vehicle (5) ahead, and **in that** the vehicle driver alert arrangement (1) is arranged to initiate the host vehicle driver alerting means (3) to alert the host vehicle driver if the road speed detector (2) detects an upcoming traffic speed limit change (7) and the one or more vehicle sensors (4) detect that the host vehicle driver initiates an overtake of the vehicle (5) ahead.

2. The vehicle driver alert arrangement (1) according to claim 1, **characterized in that** the one or more vehicle sensors (4) is/are arranged to detect at least one of a steering wheel angle change, a yaw rate, a turning indicator activation, a distance to road markings, a distance to a surrounding vehicle and a driver behaviour.

3. The vehicle driver alert arrangement (1) according to any one of claims 1 and 2, **characterized in that** the road speed detector (2) comprises image capturing means and processing means.

4. The vehicle driver alert arrangement (1) according to any one of claims 1 - 3, **characterized in that** the road speed detector (2) is connected to a map database and a positioning system.

5. The vehicle driver alert arrangement (1) according to any one of claims 1 - 4, **characterized in that** the road speed detector (2) is connected to an intelligent transport system.

6. The vehicle driver alert arrangement (1) according to any one of claims 1 - 5, **characterized in that** the road speed detector (2) is adapted to use historic traffic speed information.

7. The vehicle driver alert arrangement (1) according to any one of the previous claims, **characterized in that** the host vehicle driver alerting means (3) is arranged to alert the driver visually and/or audibly and/or haptically.

8. The vehicle driver alert arrangement (1) according to any one of the previous claims, **characterized in that** the road speed detector (2) is arranged to detect an upcoming traffic speed limit change (7), where an upcoming traffic speed limit is higher than a threshold speed value, the threshold speed value being indicative of a current traffic speed limit and/or a present vehicle speed.

9. A vehicle, **characterized in that** the vehicle comprises a vehicle driver alert arrangement (1) according to any one of the previous claims.

10. A method (100) for alerting a vehicle driver, **characterized in that** the method comprises the steps of:
- detecting (110) an upcoming traffic speed limit change
- detecting (120) if a host vehicle driver initiates an overtake of a vehicle ahead, and if so,
- alerting (130) the host vehicle driver.

11. The method (100) for alerting a vehicle driver according to claim 10, **characterized in that** the step of detecting (110) an upcoming traffic speed limit change comprises at least one of:
- detecting (111) a traffic speed limit,
- accessing (112) a map database,
- communicating (113) with an intelligent transport system
- accessing (114) historic traffic speed information.

12. The method (100) for alerting a vehicle driver according to any one of claim 10 and 11, **characterized in that** the step of detecting (120) an initiating of an overtake comprises at least one of:
- detecting (121) a host vehicle steering wheel angle change,
- detecting (122) a host vehicle yaw rate,
- detecting (123) a host vehicle turning indicator activation,
- detecting (124) a distance between the host vehicle and road markings,
- detecting (125) a distance between the host vehicle and a surrounding vehicle and
- detecting (126) a host vehicle driver behaviour.

13. The method (100) for alerting a vehicle driver according to any one of claims 10 - 12, **characterized in that** the step of alerting (130) the host vehicle driver comprises at least one of:
- alerting (131) the host vehicle driver visually,
- alerting (132) the host vehicle driver via audio,
- alerting (133) the host vehicle driver haptically.
